# EUROPÄISCHE PATENTSCHRIFT

(11) **EP 3 402 741 B1**
(45) Veröffentlichungstag und Bekanntmachung des Hinweises auf die Patenterteilung: **30.10.2019**
(21) Anmeldenummer: 16822118.2
(22) Anmeldetag: 06.12.2016
(51) Int. Cl.: B67D 3/04, F16K 1/18, F16K 35/02

(54) **ENTNAHMEARMATUR FÜR FLÜSSIGKEITSBEHÄLTER**
DISPENSING TAP FOR LIQUID CONTAINER
ROBINET DE SOUTIRAGE POUR RÉCIPIENT DE LIQUIDE

(30) Priorität: 11.01.2016 DE 102016200206
(43) Veröffentlichungstag der Anmeldung: 21.11.2018
(73) Patentinhaber: Protechna S.A., 1701 Fribourg (CH)
(72) Erfinder: PAUL, Ulrich, 56235 Ransbach-Baumbach (DE)
(74) Vertreter: advotec.
(86) Internationale Anmeldenummer: PCT/EP2016/079910
(87) Internationale Veröffentlichungsnummer: WO 2017/121543

(56) Entgegenhaltungen:
- EP-A1- 1 106 565
- CA-A- 1 169 838
- US-A- 2 987 072

## Beschreibung

Die vorliegende Erfindung betrifft eine Entnahmearmatur für Flüssigkeitsbehälter, insbesondere zum Anschluss an den Auslaufstutzen oder die Auslauföffnung eines Transport- und Lagerbehälters für Flüssigkeiten, mit einem Armaturengehäuse, in dem ein mittels eines Handgriffs um eine Ventilachse verschwenkbarer Ventilkörper zum Öffnen und Schließen eines Durchflussquerschnitts eines Auslaufrohres angeordnet ist, wobei an dem Auslaufrohr ein Gehäusedom zur Lagerung einer an ihrem aus dem Auslaufrohr herausgeführten Wellenende mit dem Handgriff versehenen Ventilwelle ausgebildet ist, wobei der Handgriff zur drehfesten Verbindung mit der Ventilwelle mit einem Nabenteil auf dem Wellenende angeordnet ist, wobei der Nabenteil zur Definition einer Absperrstellung des Ventilkörpers mit einem Handgriffanschlag und der Gehäusedom mit einem Gehäuseanschlag versehen ist, die zur Sicherung der Absperrstellung in ihrer Relativanordnung mittels einer Sicherungseinrichtung arretierbar sind.

Aus der EP 1 106 565 A1 ist eine als Klappenhahn mit einer Ventilklappe als Ventilkörper ausgebildete Entnahmearmatur bekannt, die zur Ausbildung einer Sicherungseinrichtung zur Sicherung der Relativanordnung zwischen einem am Handgriff ausgebildeten Handgriffanschlag und einem am Hahngehäuse ausgebildeten Gehäuseanschlag eine Verplombung aufweist, die gleichzeitig als Originalitätssicherung dient.

In der EP 1 547 967 A1 wird vorgeschlagen, zur Sicherung des Handgriffs gegen eine unbeabsichtigte oder böswillige Verstellung des Handgriffs eine Sicherungseinrichtung vorzusehen, die etwa als Verplombung oder mechanische Verriegelung ausgebildet sein kann, wobei insbesondere ein abreißbarer Sicherungsring vorgesehen ist.

Die bekannten Sicherungseinrichtungen, die den Handgriff des Klappenhahns in einer der Absperrstellung des Klappenhahns entsprechenden Relativanordnung am Hahngehäuse sichern sollen, sind jeweils nur für den einmaligen Gebrauch geeignet und müssen nach einem ersten Öffnungsvorgang des Klappenhahns, der eine Entfernung oder Zerstörung der Sicherungseinrichtung erfordert, gegen eine neue Sicherungseinrichtung ausgetauscht werden, um für den nachfolgenden Gebrauch des Flüssigkeitsbehälters, also beispielsweise den Weitertransport eines zumindest teilgefüllten Flüssigkeitsbehälters, eine Schließstellung zu gewährleisten.

Hieraus ergibt sich insbesondere die Notwendigkeit, dass der Nutzer des Flüssigkeitsbehälters einerseits eine entsprechende Austauscheinrichtung bereithalten muss und andererseits eine erneute Montage der Sicherungseinrichtung am Klappenhahn erfolgen muss. Aufgrund des hiermit verbundenen zusätzlichen Aufwands besteht die Gefahr, dass zur Vermeidung des Aufwands ein Transport von zumindest teilgefüllten Flüssigkeitsbehältern ohne die notwendige Sicherung der Entnahmearmatur in ihrer Schließstellung erfolgt.

Der vorliegenden Erfindung liegt daher die Aufgabe zugrunde, eine Entnahmearmatur vorzuschlagen, die eine verbesserte Sicherungseinrichtung aufweist.

Zur Lösung dieser Aufgabe weist die erfindungsgemäße Entnahmearmatur die Merkmale des Anspruchs 1 auf.

Erfindungsgemäß weist die Sicherungseinrichtung einen Anschlagriegel auf, der an einer am Nabenteil angeordneten Führungseinrichtung gehalten und mittels der Führungseinrichtung zwischen einer Verriegelungsstellung und einer Entriegelungsstellung translatorisch in Richtung der Ventilachse bewegbar ist, wobei der Anschlagriegel in der Verriegelungsstellung zur Sicherung der Absperrstellung in einem Eingriffsverbund mit einem ersten Riegelanschlag und einem zweiten Riegelanschlag angeordnet ist.

Aufgrund der erfindungsgemäßen Ausgestaltung der Sicherungseinrichtung, bei der der Anschlagriegel sowohl in der Riegelstellung als auch in der Entriegelstellung an einer Führungseinrichtung gehalten wird, verbleibt der Anschlagriegel auch in der Entriegelstellung an der Entnahmearmatur, so dass der Anschlagriegel nachfolgend einem Entriegelungsvorgang zur Verstellung des Ventilkörpers in seine Öffnungsstellung wiederverwendet werden kann, um nach Überführung des Ventilkörpers in die Absperrstellung erneut in seine Riegelstellung bewegt zu werden.

Bei der erfindungsgemäßen Entnahmearmatur ist weder ein Ersatz der Sicherungseinrichtung nach erfolgter Betätigung der Entnahmearmatur, noch eine erneute Montage der Sicherungseinrichtung oder Teilen davon nach erfolgter Betätigung der Entnahmearmatur notwendig.

Bei einer bevorzugten Ausführungsform ist die Führungseinrichtung als Führungssteg ausgebildet, der als integraler Bestandteil einer Umfangswand des Nabenteils ausgebildet ist, wobei zur Ausführung der Bewegung des Anschlagriegels im Übergang von dem Führungssteg zu einer Bodenwand des Nabenteils in der Bodenwand eine Durchgangsöffnung ausgebildet ist.

Hierdurch wird einerseits eine vor äußerer Krafteinwirkung geschützte Ausbildung der Sicherungseinrichtung an der Entnahmearmatur möglich. Zum anderen kann die im Falle der Entriegelungsstellung aus der Bodenwand des Nabenteils hervorragende Anordnung des Anschlagriegels als optische Kennzeichnung für die Entriegelungsstellung der Sicherungseinrichtung dienen.

Vorzugsweise weist der Anschlagriegel einen Riegelschenkel zur Verriegelung mit den Riegelanschlägen und einen Betätigungsschenkel zur Handhabung des Anschlagriegels auf, wobei der Riegelschenkel und der Betätigungsschenkel im Wesentlichen parallel zueinander angeordnet sind und an benachbarten Enden über eine Anschlagbasis miteinander verbunden sind, wobei die Anschlagbasis in der Verriegelungsstellung an einem durch das obere Ende des Führungsstegs ausgebildeten Öffnungsrand der Durchgangsöffnung anliegt. Der unabhängig von dem die eigentliche Riegelfunktion ausführenden Riegelschenkel ausgebildete Betätigungsschenkel ermöglicht eine einfache Handhabung und leichten Zugriff auf den Anschlagriegel, unabhängig davon, ob sich dieser in seiner Verriegelungsstellung oder in der Entriegelungsstellung befindet.

Wenn die Anschlagbasis eine in der Riegelstellung des Anschlagriegels flächenbündig in einer Sichtfläche der Bodenwand des Nabenteils angeordnete Oberfläche aufweist, kann eine Übergangsfläche zwischen der Sichtfläche Bodenwand des Nabenteils und der Oberfläche der Anschlagbasis zur Applikation eines beispielsweise als Papier- oder Folienstreifen ausgebildeten Originalitätssiegels dienen, das bei einer Überführung des Anschlagriegels in seine Entriegelungsstellung zerstört wird.

Vorzugsweise weist der Riegelschenkel zur Ausbildung einer Rückhalteeinrichtung einen mit dem Nabenteil zusammenwirkenden, die Bewegung des Anschlagriegels in die Entriegelungsstellung begrenzenden Riegelanschlag auf.

In einer bevorzugten Ausführungsform weist der Betätigungsschenkel des Anschlagriegels eine Befestigungseinrichtung zur Befestigung eines Originalitätssiegels auf.

Vorzugsweise ist die Befestigungseinrichtung als Durchgangsöffnung ausgebildet, die insbesondere in einem radial abstehenden Handhabungssteg des Betätigungsschenkels ausgebildet sein kann.

In einer bevorzugten Ausführungsform ist der erste Riegelanschlag durch den Gehäuseanschlag des Gehäusedoms und der zweite Riegelanschlag durch den Handgriffanschlag gebildet ist, wobei der Gehäuseanschlag zwischen dem Handgriffanschlag und dem Anschlagriegel aufgenommen ist.

Wenn der Gehäuseanschlag durch eine außen am Gehäusedom angeordnete Anschlaglasche ausgebildet ist, kann der Gehäuseanschlag besonders massiv ausgeführt werden.

In einer weiteren Ausführungsform ist der erste Riegelanschlag durch einen ersten am Gehäusedom ausgebildeten Gehäuseanschlag und der zweite Riegelanschlag durch einen zweiten am Gehäusedom ausgebildeten Gehäuseanschlag gebildet, und der Anschlagriegel ist zwischen den Gehäuseanschlägen aufgenommen. Diese Ausführungsform ermöglicht die Realisierung beider Riegelanschläge am Gehäusedom.

Wenn der erste Riegelanschlag durch ein erstes axiales Ende eines am Oberrand des Gehäusedoms umlaufend ausgebildeten Randstegs und der zweite Riegelanschlag durch ein gegenüberliegend dem ersten axialen Ende angeordnetes zweites axiales Ende des Randstegs gebildet ist, wird eine besonders kompakte Ausgestaltung der Sicherungseinrichtung möglich.

Nachfolgend werden bevorzugte Ausführungsformen der Entnahmearmatur anhand der Zeichnungen näher erläutert.

Es zeigen:
- **Fig. 1**: eine Entnahmearmatur in einer ersten Ausführungsform in Absperrstellung und mit einer Sicherungseinrichtung in Verriegelungsstellung;
- **Fig. 2**: die in **Fig. 1** dargestellte Entnahmearmatur in Absperrstellung mit der Sicherungseinrichtung in Entriegelungsstellung;
- **Fig. 3**: einen Anschlagriegel der Sicherungseinrichtung in isometrischer Darstellung;
- **Fig. 4**: den in **Fig. 3** dargestellten Anschlagriegel in Seitenansicht;
- **Fig. 5**: den in **Fig. 3** dargestellten Anschlagriegel in einer weiteren isometrischen Ansicht;
- **Fig. 6**: eine Teilschnittdarstellung der in **Fig. 1** dargestellten Entnahmearmatur längs Schnittlinienverlauf VI-VI in **Fig. 1**;
- **Fig. 7**: eine Teilschnittdarstellung der in **Fig. 2** dargestellten Entnahmearmatur längs Schnittlinienverlauf VII-VII;
- **Fig. 8**: eine Entnahmearmatur in einer weiteren Ausführungsform in Öffnungsstellung und mit einer Sicherungseinrichtung in Entriegelungsstellung;
- **Fig. 9**: ein Armaturengehäuse der in **Fig. 8** dargestellten Entnahmearmatur;
- **Fig.10**: die in **Fig. 8** dargestellte Entnahmearmatur in Absperrstellung mit Sicherungseinrichtung in Entriegelungsstellung;
- **Fig.11**: die in **Fig. 10** dargestellte Entnahmearmatur in Absperrstellung mit Sicherungseinrichtung in Verriegelungsstellung;
- **Fig.12**: eine Schnittdarstellung der in **Fig. 11** dargestellten Entnahmearmatur gemäß Schnittlinienverlauf XII-XI in **Fig. 11****.**

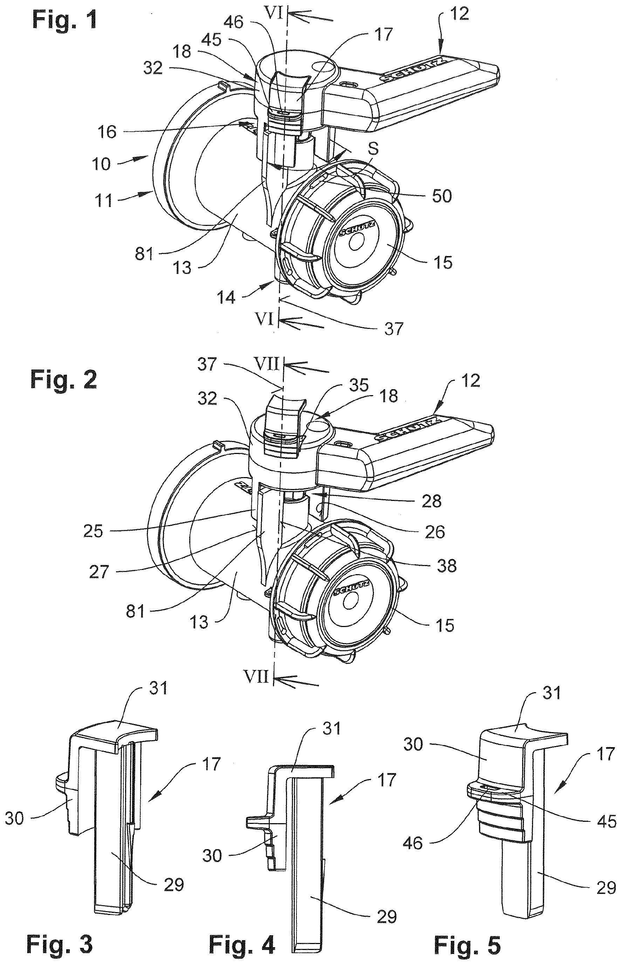

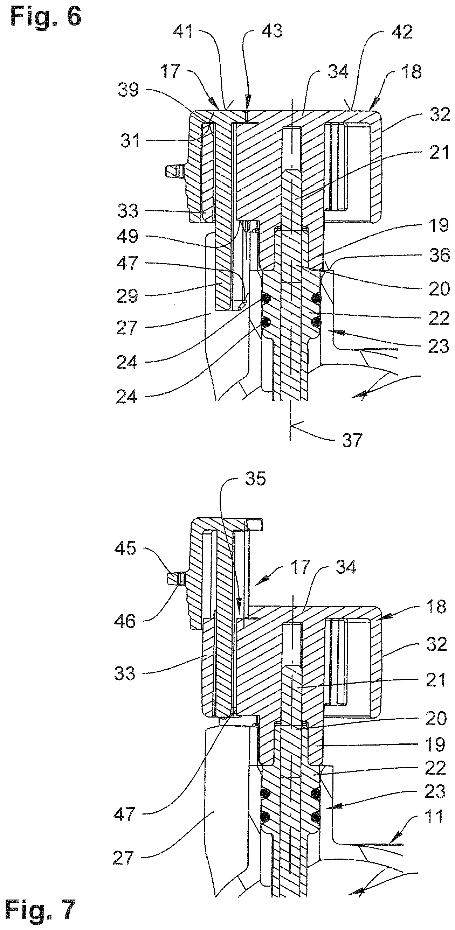

**Fig. 1** zeigt eine Entnahmearmatur 10 mit einem Armaturengehäuse 11 und einem am Armaturengehäuse 11 angeordneten Handgriff 12, der zur Betätigung eines in einem Auslaufrohr 13 angeordneten, hier nicht näher dargestellten Ventilkörpers dient, der zum Öffnen und Schließen eines Durchflussquerschnitts (**Fig. 6, 7**) des Auslaufrohres 13 mittels des Handgriffs 12 in eine Öffnungsstellung und eine Absperrstellung gebracht werden kann.

In den Darstellungen gemäß **Fig. 1 und 2** ist das Auslaufrohr 13 der Entnahmearmatur 10 an seinem Auslaufende 14 mit einer Verschlusskappe 15 versehen. Dabei entspricht die in **Fig. 1** dargestellte Konfiguration der Entnahmearmatur 10 dem Zustand der Entnahmearmatur 10 während des Transports eines mit der Entnahmearmatur 10 versehenen Flüssigkeitsbehälters.

Zur Sicherung der Absperrstellung des Ventilkörpers ist an der Entnahmearmatur eine Sicherungseinrichtung 16 vorgesehen, die einen am Handgriff 12 an einer hier als Führungssteg 33 (**Fig. 6, 7**) ausgebildeten Führungseinrichtung gehaltenen Anschlagriegel 17 umfasst.

Wie die **Fig. 1 und 2** zeigen, ist der Anschlagriegel 17 an einem Nabenteil 18 des Handgriffs 12 angeordnet, wobei der Nabenteil 18, wie in den **Fig. 6 und 7** dargestellt, kappenartig ausgebildet ist und mit einer Nabenhülse 19 zur Übertragung eines Drehmoments vom Handgriff 12 auf eine Ventilwelle 20, an dessen unterem Ende sich der hier nicht näher dargestellte Ventilkörper befindet, auf ein oberes Wellenende 21 der Ventilwelle 20 aufgesetzt ist. Die Ventilwelle 20 ist mit einem Lagerbund 22 in einem am Armaturengehäuse 11 ausgebildeten Gehäusedom 23 gelagert und mittels am Lagerbund 22 angeordneten Dichtungsringen 24 gegenüber einem Durchflussquerschnitt (**Fig. 6**) des Auslaufrohres 13 abgedichtet.

Wie insbesondere **Fig. 2** zeigt, weist der Nabenteil 18 des Handgriffs 12 der Entnahmearmatur 10 zwei in einer Umfangswand 32 des Nabenteils 18 ausgebildete Handgriffanschläge 25, 26 auf, die eine Verdrehung des Handgriffs 12 um eine durch die Ventilwelle 20 definierte Schwenkachse 37 begrenzen. In den **Fig. 1 und 2****,** in denen die Entnahmearmatur 10 in Absperrstellung dargestellt ist, befindet sich der in den **Fig. 1 und 2** jeweils linke Handgriffanschlag 25 in einer Anschlagstellung gegen einen an einer Anschlaglasche 81 am Armaturengehäuse 11 ausgebildeten Gehäuseanschlag 27. Der in den **Fig. 1 und 2** jeweils rechte Handgriffanschlag 26, der in einer Anschlagstellung gegen einen ebenfalls an der Anschlaglasche 81 ausgebildeten Gehäuseanschlag 38 eine Öffnungsstellung des Ventilkörpers definiert, ist durch eine Ausnehmung 28 in der Umfangswand 32 des Nabenteils 18 von dem Handgriffanschlag 25 beabstandet, so dass innerhalb der Ausnehmung 28 ein Stellweg s ermöglicht ist.

Wie in den **Fig. 3 bis 5** dargestellt, weist der Anschlagriegel 17 einen Riegelschenkel 29 sowie einen sich im Wesentlichen parallel zum Riegelschenkel 29 erstreckenden Betätigungsschenkel 30 zur Handhabung des Anschlagriegels 17 und eine den Riegelschenkel 29 mit dem Betätigungsschenkel 30 verbindende Anschlagbasis 31 auf.

Zur Verbindung des Anschlagriegels 17 mit dem Nabenteil 18 des Handgriffs 12 ist, wie in den **Fig. 6 und 7** dargestellt, in der Umfangswand 32 des Nabenteils 18 integral der Führungssteg 33 ausgebildet, auf den der Anschlagriegel 17 durch eine in einer Bodenwand 34 des Nabenteils 18 benachbart dem Führungssteg 33 ausgebildete Durchgangsöffnung 35 (**Fig. 2**) aufgeschoben werden kann.

Die **Fig. 2** **und** **7** zeigen den Anschlagriegel 17 in seiner Entriegelungsstellung, in der der Anschlagriegel 17 mit dem Riegelschenkel 29 in die Bodenwand 34 des Nabenteils 18 so weit eingeführt ist, dass zwischen dem Riegelschenkel 29 und dem Gehäuseanschlag 27 noch keine Überdeckung ausgebildet ist, also ein Verschwenken des Handgriffs 12 um die Schwenkachse 37 möglich ist, so dass bei einem Verschwenken des Handgriffs 12 um den Stellweg s der rechte Handgriffanschlag 26 in eine Anschlagstellung gegen den Gehäuseanschlag 27 zur Überführung des Ventilkörpers in eine Öffnungsstellung gelangt.

Wie insbesondere der **Fig. 1** zu entnehmen ist, ist der Anschlagriegel 17 an seinem Betätigungsschenkel 30 mit einem Handhabungssteg 45 versehen, der eine Durchgangsöffnung 46 aufweist, die zusammen mit einer an einem Umfangsrand der Verschlusskappe 15 vorgesehenen weiteren Durchgangsöffnung 50 die Möglichkeit bietet, ein etwa als Plombendraht ausgebildetes Originalitätssiegel an der Entnahmearmatur 10 anzuordnen, derart, dass eine Überführung des Anschlagriegels 17 in seine in **Fig. 2** dargestellte Entriegelungsstellung nur nach Zerstörung des Plombendrahts möglich ist.

Zur Überführung des Anschlagriegels 17 von der in den **Fig. 2** **und** **7** dargestellten Entriegelstellung in die in den **Fig. 1** **und** **6** dargestellte Verriegelungsstellung wird der Anschlagriegel 17 parallel zur Schwenkachse 37 weiter in die Durchgangsöffnung 35 eingeschoben bis zur Anlage der Anschlagbasis 31 gegen einen durch das obere Ende des Führungsstegs 33 ausgebildeten Öffnungsrand 39 der Durchgangsöffnung 35. In der Verriegelungsstellung ergibt sich zwischen dem Gehäuseanschlag 27 und dem Riegelschenkel 29 eine insbesondere in der **Fig. 6** dargestellte Überdeckung, derart, dass in der in **Fig. 1** dargestellten Absperrstellung der durch die Anschlaglasche 81 ausgebildete Gehäuseanschlag 27 zwischen dem Handgriffanschlag 25 und dem Riegelschenkel 29 des Anschlagriegels 17 aufgenommen ist und der Anschlagriegel 17 zusammen mit dem Handgriffanschlag 25 und dem Gehäuseanschlag 27 die Sicherungseinrichtung 16 ausbildet und ein Verschwenken des Handgriffs 12 um die Schwenkachse 37 in die Öffnungsstellung nicht mehr möglich ist.

Wie insbesondere die **Fig. 6** zeigt, ist in der Verriegelungsstellung eine Oberfläche 41 der Anschlagbasis 31 flächenbündig mit einer Sichtfläche 42 des Nabenteils 18 des Handgriffs 12 angeordnet, so dass im Übergang von der Oberfläche 41 zur Sichtfläche 42 eine ebene Siegelfläche 43 ausgebildet ist, die zur Anbringung einer Siegelfolie oder eines Siegelstreifens verwendet werden kann.

Eine Zusammenschau der **Fig. 6 und 7** macht deutlich, dass eine Überführung des Anschlagriegels 17 von der in **Fig. 6** dargestellten Verriegelungsstellung in die in **Fig. 7** dargestellte definierte Entriegelungsstellung erfolgen kann, ohne dass der Anschlagriegel 17 außer Eingriff mit der durch den Führungssteg 33 gebildeten Führungseinrichtung gelangt. Sowohl zur Definition der Entriegelungsstellung als auch zur verliersicheren Anordnung des Anschlagriegels 17 an dem Nabenteil 18 des Handgriffs 17 ist an dem Riegelschenkel 29 zur Ausbildung einer Rückhalteeinrichtung ein Riegelanschlag 47 ausgebildet, der in der Entriegelungsstellung gegen eine Unterseite 49 des Nabenteils 18 anschlägt.

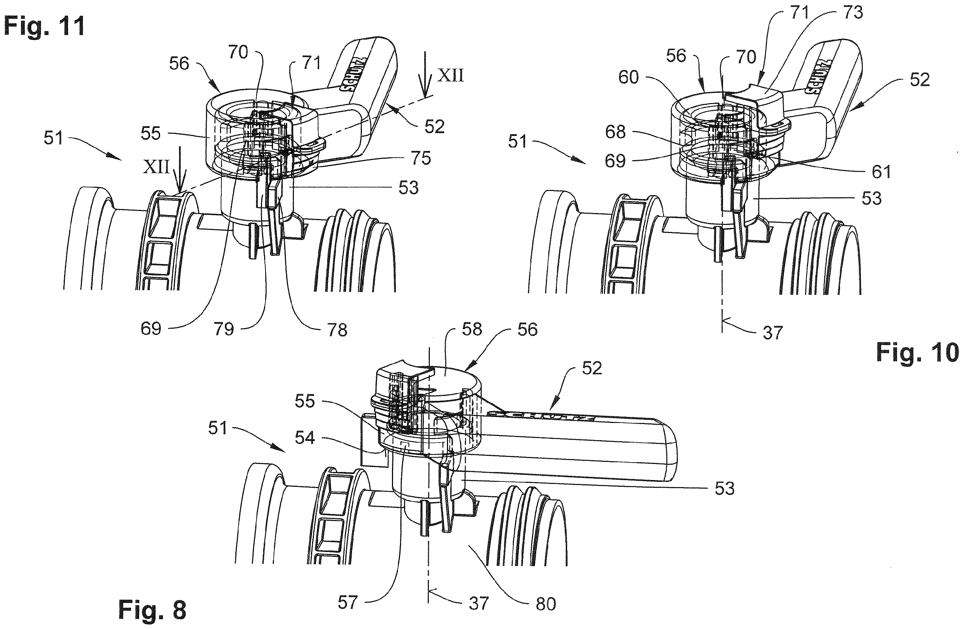

In **Fig. 8** ist in einer weiteren Ausführungsform eine Entnahmearmatur 51 dargestellt, die entsprechend der Entnahmearmatur 10 ein Armaturengehäuse 80 mit einem Handgriff 52 umfasst, der auf einem Gehäusedom 53 angeordnet ist.

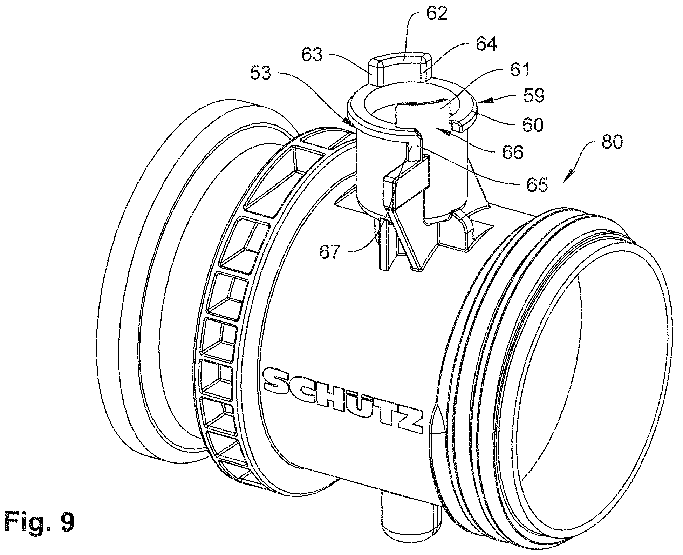

Im Unterschied zu der Anordnung des Handgriffs 12 auf dem Gehäusedom 23 der Entnahmearmatur 10, derart, dass wie insbesondere in **Fig. 7** dargestellt, die Nabenhülse 19 des Handgriffs 12 unmittelbar mit dem Lagerbund 22 der Ventilwelle 20 verbunden ist, erfolgt die Befestigung des Handgriffs 52 am Gehäusedom 53 derart, dass an einem Unterrand 54 einer Umfangswand 55 eines Nabenteils 56 des Handgriffs 52 diametral einander gegenüberliegend und radial nach innen ragende Rastnasen 57 angeordnet sind, die bei einem axialen Fügevorgang zur Montage des Handgriffs 52 in Richtung der Schwenkachse 37 einen insbesondere in **Fig. 9** dargestellte, am Oberrand 59 des Gehäusedoms 53 ausgebildeten Randsteg 60 hintergreifen, wobei eine in **Fig. 8** nicht dargestellte Ventilwelle einstückig mit einer Bodenwand 58 des Handgriffs 52 verbunden ist. Bei der Entnahmearmatur 51 bilden demnach der Handgriff 52 und die Ventilwelle eine einstückige Montageeinheit.

Wie insbesondere **Fig. 9** zeigt, weist der Gehäusedom 53 zwei diametral einander gegenüberliegende, den Oberrand 59 überragende Gehäuseanschläge 61, 62 sowie durch eine Randstegausnehmung 66 einander gegenüberliegend ausgebildete axiale Enden 67, 72 des Randstegs 60 auf, die Riegelanschläge ausbilden.

Wie **Fig. 10** zeigt, weist der Handgriff 52 auf einer Innenseite 68 des Nabenteils 56 zwei diametral einander gegenüberliegend angeordnete Handgriffanschläge 69, 70 auf, die bei einem Verschwenken des Handgriffs 52 um die Schwenkachse 37 zwei Anschlagstellungen ermöglichen, in denen die Handgriffanschläge 69, 70 an jeweils einem der insbesondere in **Fig. 9** dargestellten Gehäuseanschläge 61, 62 anliegen.

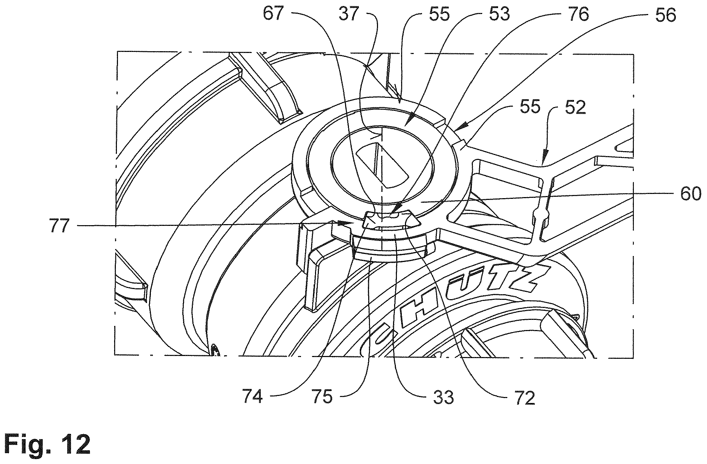

Wie **Fig. 10** zeigt, ist durch den Anschlag des Handgriffanschlags 69 gegen den Gehäuseanschlag 61 und den Anschlag des Handgriffanschlags 70 gegen den Gehäuseanschlag 62 die Absperrstellung der Entnahmearmatur 51 definiert. In der in **Fig. 10** dargestellten Absperrstellung der Entnahmearmatur 51 befindet sich ein am Handgriff 52 angeordneter Anschlagriegel 71, der übereinstimmend mit dem Anschlagriegel 17 der Verriegelungseinrichtung 38 an einem Führungssteg 33 (**Fig. 7**) in der Umfangswand 55 des Handgriffs 52 gehalten ist, in seiner Entriegelungsstellung, in der eine Anschlagbasis 73 des Anschlagriegels 71, die einen insbesondere in **Fig. 12** dargestellten Riegelschenkel 74 mit einem Betätigungsschenkel 75 verbindet, oberhalb der Bodenwand 58 des Nabenteils 56 des Handgriffs 52 angeordnet ist.

Aus der in **Fig. 10** dargestellten Entriegelungsstellung kann der Anschlagriegel 71 zur Sicherung der Absperrstellung der Entnahmearmatur 51 in seine in den **Fig. 11** **und** **12** dargestellte Verriegelungsstellung verschoben werden, wobei der Riegelschenkel 74 in einem zwischen dem Gehäusedom 53 und der Umfangswand 55 des Nabenteils 56 des Handgriffs 52 ausgebildeten Zwischenraum 76 nach unten verschoben wird.

In dieser Verriegelungsstellung bildet, wie aus **Fig. 12** ersichtlich, der Riegelschenkel 74 des Anschlagriegels 71 zusammen mit den Riegelanschläge ausbildenden axialen Enden 67, 72 des Randstegs 60 eine Sicherungseinrichtung 77, die eine Drehung des Handgriffs 52 in beide Drehrichtungen um die Schwenkachse 37 wirksam blockiert.

Wie ein Vergleich der **Fig. 1** **und** **11** zeigt, ermöglicht die Ausgestaltung der mit dem Riegelschenkel 74 zusammenwirkenden Riegelanschläge als axiale Enden 67, 72 des Randwulstes 60 eine vergleichsweise kurze Ausgestaltung des Riegelschenkels 74, so dass im Fall des Anschlagriegels 71 der Riegelschenkel 74 und der Betätigungsschenkel 75 im Wesentlichen gleich lang ausgeführt sind und den Nabenteil 56 beziehungsweise den Unterrand 54 der Umfangswand 55 des Nabenteils 56 nicht nach unten überragen.

Wie **Fig. 11** zeigt, sind der Gehäusedom 53 der Entnahmearmatur 51 sowie der Nabenteil 56 des Handgriffs 52 jeweils mit einer radial nach außen vorstehenden Anzeigelasche 78, 79 versehen, die sich in der Absperrstellung der Entnahmearmatur 52 in einer einander teilweise überdeckenden und unmittelbar zueinander benachbarten Relativanordnung befinden. Dabei dienen die Anzeigelaschen 78, 79 in erster Linie zur äußerlich leicht erkennbaren Anzeige der Absperrstellung der Entnahmearmatur und sind insbesondere nicht funktional an der Ausgestaltung der Verriegelungseinrichtung beteiligt.

Aufgrund ihrer vergleichsweise massiven Ausgestaltung ermöglichen die Anzeigelaschen 78, 79 dennoch die Ausbildung einer zusätzlichen mechanischen Blockierung, die es verhindert, dass der Handgriff 52 über die in **Fig. 11** dargestellte Absperrstellung hinaus im Gegenuhrzeigersinn mit übermäßiger Krafteinwirkung unter etwaiger Beschädigung der Gehäuseanschläge 61, 62 und der Handgriffanschläge 69, 70 verschwenkt werden kann.

## Patentansprüche

1. Entnahmearmatur (10, 51) für Flüssigkeitsbehälter, insbesondere zum Anschluss an den Auslaufstutzen oder die Auslauföffnung eines Transport- und Lagerbehälters für Flüssigkeiten, mit einem Armaturengehäuse (11, 80), in dem ein mittels eines Handgriffs (12, 52) um eine Ventilachse verschwenkbarer Ventilkörper zum Öffnen und Schließen eines Durchflussquerschnitts eines Auslaufrohres (13) angeordnet ist, wobei an dem Auslaufrohr ein Gehäusedom (23, 53) zur Lagerung einer an ihrem aus dem Auslaufrohr herausgeführten Wellenende (21) mit dem Handgriff versehenen Ventilwelle (20) ausgebildet ist, wobei der Handgriff zur drehfesten Verbindung mit der Ventilwelle mit einem Nabenteil (18, 56) auf dem Wellenende angeordnet ist, wobei der Nabenteil zur Definition einer Absperrstellung des Ventilkörpers mit einem Handgriffanschlag (25, 69) und der Gehäusedom mit einem Gehäuseanschlag (27, 61) versehen ist, die zur Sicherung der Absperrstellung in ihrer Relativanordnung mittels einer Sicherungseinrichtung (16, 77) arretierbar sind,
**dadurch gekennzeichnet,**
**dass** die Sicherungseinrichtung (16, 77) einen Anschlagriegel (17, 71) aufweist, der an einer am Nabenteil (18, 56) angeordneten Führungseinrichtung gehalten und mittels der Führungseinrichtung zwischen einer Verriegelungsstellung und einer Entriegelungsstellung translatorisch in Richtung der Ventilachse bewegbar ist, wobei der Anschlagriegel (17, 71) in der Verriegelungsstellung zur Sicherung der Absperrstellung in einem Eingriffsverbund mit einem ersten Riegelanschlag und einem zweiten Riegelanschlag angeordnet ist.

2. Entnahmearmatur nach Anspruch 1,
**dadurch gekennzeichnet,**
**dass** die Führungseinrichtung als Führungssteg (33) ausgebildet ist, der als integraler Bestandteil einer Umfangswand (32, 55) des Nabenteils (18, 56) ausgebildet ist, wobei zur Ausführung der Bewegung des Anschlagriegels (17, 71) im Übergang von dem Führungssteg zu einer Bodenwand (34, 58) des Nabenteils in der Bodenwand eine Durchgangsöffnung (35) ausgebildet ist.

3. Entnahmearmatur nach Anspruch 2,
**dadurch gekennzeichnet,**
**dass** der Anschlagriegel (17, 71) einen Riegelschenkel (29, 74) zur Verriegelung mit den Riegelanschlägen und einen Betätigungsschenkel (30, 75) zur Handhabung des Anschlagriegels aufweist, wobei der Riegelschenkel und der Betätigungsschenkel im Wesentlichen parallel zueinander angeordnet sind und an benachbarten Enden über eine Anschlagbasis (31, 73) miteinander verbunden sind, wobei die Anschlagbasis in der Verriegelungsstellung an einem durch das obere Ende des Führungsstegs (33) ausgebildeten Öffnungsrand (39) der Durchgangsöffnung (35) anliegt.

4. Entnahmearmatur nach Anspruch 3,
**dadurch gekennzeichnet,**
**dass** die Anschlagbasis (31, 73) eine in der Riegelstellung des Anschlagriegels (17, 71) flächenbündig in einer Sichtfläche (42) der Bodenwand (34, 58) des Nabenteils (18, 56) angeordnete Oberfläche (41) aufweist.

5. Entnahmearmatur nach Anspruch 3 oder 4,
**dadurch gekennzeichnet,**
**dass** der Riegelschenkel (29) zur Ausbildung einer Rückhalteeinrichtung einen mit dem Nabenteil (18) zusammenwirkenden, die Bewegung des Anschlagriegels (17) in die Entriegelungsstellung begrenzenden Riegelanschlag (47) aufweist.

6. Entnahmearmatur nach einem der Ansprüche 3 bis 5,
**dadurch gekennzeichnet,**
**dass** der Betätigungsschenkel (30) des Anschlagriegels (17) eine Befestigungseinrichtung zur Befestigung eines Originalitätssiegels aufweist.

7. Entnahmearmatur nach Anspruch 6,
**dadurch gekennzeichnet,**
**dass** die Befestigungseinrichtung als Durchgangsöffnung (46) ausgebildet ist.

8. Entnahmearmatur nach Anspruch 7,
**dadurch gekennzeichnet,**
**dass** die Befestigungseinrichtung als Durchgangsöffnung (46) in einem radial abstehenden Handhabungssteg (45) des Betätigungsschenkels (30) ausgebildet ist.

9. Entnahmearmatur nach einem der Ansprüche 1 bis 8,
**dadurch gekennzeichnet,**
**dass** der erste Riegelanschlag durch den Gehäuseanschlag (27) des Gehäusedoms (23) und der zweite Riegelanschlag durch den Handgriffanschlag (25) gebildet ist, wobei der Gehäuseanschlag (27) zwischen dem Handgriffanschlag (25) und dem Anschlagriegel (17) aufgenommen ist.

10. Entnahmearmatur nach Anspruch 9,
**dadurch gekennzeichnet,**
**dass** der Gehäuseanschlag (27) durch eine außen am Gehäusedom (23) angeordnete Anschlaglasche (81) ausgebildet ist.

11. Entnahmearmatur nach einem der Ansprüche 1 bis 8,
**dadurch gekennzeichnet,**
**dass** der erste Riegelanschlag durch einen ersten am Gehäusedom (53) ausgebildeten Gehäuseanschlag und der zweite Riegelanschlag durch einen zweiten am Gehäusedom ausgebildeten Gehäuseanschlag gebildet ist und der Anschlagriegel (71) zwischen den Gehäuseanschlägen aufgenommen ist.

12. Entnahmearmatur nach einem der Anspruch 11,
**dadurch gekennzeichnet,**
**dass** der erste Riegelanschlag durch ein erstes axiales Ende (67) eines am Oberrand (59) des Gehäusedoms (53) umlaufend ausgebildeten Randstegs (60) und der zweite Riegelanschlag durch ein gegenüberliegend dem ersten axialen Ende (67) angeordnetes zweites axiales Ende (72) des Randstegs (60) gebildet ist.

## Claims

1. A discharge tap (10, 51) for liquid containers, in particular for connecting to the outlet neck or the outlet opening of a transportation and storage container for liquids, having a tap housing (11, 80) in which a valve body being pivotable around a valve axle by means of a handle (12, 52) for opening and closing a flow cross section of an outlet tube (13) is arranged, a housing dome (23, 53) being formed at the outlet tube for mounting a valve shaft (20) provided with the handle at its shaft end (21 and extending out of the outlet tube, said handle being connected to the valve shaft in a torque-proof manner and being arranged on the shaft end with a hub part (18, 56), said hub part being provided with a handle stop (25, 69) for defining a shut-off position of the valve body and the housing dome being provided with a housing stop (27, 61), said handle stop and said housing stop being able to be locked relatively to each other via a securing device (16, 77) for securing the shut-off position,
**characterised in that**
the securing device (16, 77) comprises a stop bolt (17, 71) which is held at a guiding device arranged at the hub part (18, 56) and can be displaced between a locking position and an unlocking position in a translatory manner in direction of the valve axle by means of the guiding device, said stop bolt (17, 71), when in the locking position, being positioned in an engagement arrangement with a first bolt stop and a second bolt stop for securing the shut-off position.

2. The discharge tap according to claim 1,
**characterised in that**
the guiding device is formed as a guiding web (33) which is formed as an integral part of a circumferential wall (32, 55) of the hub part (18, 56), a through opening (35) being formed in a bottom wall (34, 58) in the transition from said guiding web to the bottom wall of the hub part in order to displace the stop bolt (17, 71).

3. The discharge tap according to claim 2,
**characterised in that**
the stop bolt (17, 71) comprises a bolt leg (29, 74) for locking with the bolt stops and an actuating leg (30, 75) for handling the stop bolt, said bolt leg and said actuating leg being arranged essentially parallel to each other and being connected to each other at adjacent ends via a stop base (31, 73), said stop base, when in the locking position, resting on an opening edge (39) of the through opening (35) formed by the upper end of the guiding web (33).

4. The discharge tap according to claim 3,
**characterised in that**
the stop base (31, 73) comprises a surface (41) arranged flush in a visible surface (42) of the bottom wall (34, 58) of the hub part (18, 56) when in the locking position of the stop bolt (17, 71).

5. The discharge tap according to claim 3 or 4,
**characterised in that**
the bolt leg (29) comprises a bolt stop (47), which limits the displacement of the stop bolt (17) into the unlocking position and interacts with the hub part (18), for forming a retaining device.

6. The discharge tap according to any one of the claims 3 to 5,
**characterised in that**
the actuating leg (30) of the stop bolt (17) comprises an attaching device for attaching a tamper-proof seal.

7. The discharge tap according to claim 6,
**characterised in that**
the attaching device is formed as a through opening (46).

8. The discharge tap according to claim 7,
**characterised in that**
the attaching device is formed as a through opening (46) in a radially protruding handling web (45) of the actuating leg (30).

9. The discharge tap according to any one of the claims 1 to 8,
**characterised in that**
the first bolt stop is formed by the housing stop (27) of the housing dome (23) and the second bolt stop is formed by the handle stop (25), said housing stop (27) being received between the handle stop (25) and the stop bolt (17).

10. The discharge tap according to claim 9,
**characterised in that**
the housing stop (27) is formed by a stop tab (81) arranged on the outside of the housing dome (23).

11. The discharge tap according to any one of the claims 1 to 8,
**characterised in that**
the first bolt stop is formed by a first housing stop formed at the housing dome (53) and the second bolt stop is formed by a second housing stop formed at the housing dome and the stop bolt (71) is received between the housing stops.

12. The discharge tap according to claim 11,
**characterised in that**
the first bolt stop is formed by a first axial end (67) of an edge web (60) formed circumferentially at the upper edge (59) of the housing dome (53) and the second bolt stop is formed by a second axial end (72) of the edge web (60) arranged opposite the first axial end (67).

## Revendications

1. Armature de prélèvement (10, 51) pour des cuves de liquide, en particulier pour le raccordement à la tubulure de sortie ou l'ouverture de sortie d'une cuve de transport et stockage pour des liquides, ayant un boîtier d'armature (11, 80), un corps de vanne qui est pivotable autour d'un axe de vanne au moyen d'une poignée (12, 52) et qui sert pour ouvrir et fermer une section de passage d'un tuyau de sortie (13) étant disposé dans ledit boîtier d'armature, un dôme de boîtier (23, 53) pour supporter un arbre de vanne (20) muni de la poignée à son extrémité d'arbre (21) qui sort du tuyau de sortie étant conçu audit tuyau de sortie, ladite poignée étant disposée sur l'extrémité d'arbre avec une partie de moyeu (18, 56) pour être reliée avec l'arbre de vanne de manière non-rotative, ladite partie de moyeu étant munie d'une butée de poignée (25, 69) pour définir une position d'arrêt du corps de vanne et ledit dôme de boîtier étant muni d'une butée de boîtier (27, 61), ladite butée de poignée et ladite butée de boîtier étant apte à être arrêtées l'une par rapport à l'autre au moyen d'une unité de sécurité (16, 77) pour garantir la position d'arrêt,
**caractérisée en ce que**
l'unité de sécurité (16, 77) présente un verrou de butée (17, 71) qui est tenu à une unité de guidage disposée à la partie de moyeu (18, 56) et qui est apte à être mu de manière translationnelle dans la direction de l'axe de vanne entre une position de verrouillage et une position de déverrouillage au moyen de l'unité de guidage, ledit verrou de butée (17, 71), dans la position de verrouillage, étant disposé dans une liaison d'engagement avec une première butée de verrou et une deuxième butée de verrou pour garantir la position d'arrêt.

2. Armature de prélèvement selon la revendication 1,
**caractérisée en ce que**
l'unité de guidage est conçue comme une barrette de guidage (33) qui est conçue comme une partie intégrale d'une paroi périphérique (32, 55) de la partie de moyeu (18, 56), une ouverture de passage (35) étant conçue, pour exécuter le mouvement du verrou de butée (17, 71) dans la transition de la barrette de guidage vers une paroi de fond (34, 58) de la partie de moyeu, dans la paroi de fond.

3. Armature de prélèvement selon la revendication 2,
**caractérisée en ce que**
le verrou de butée (17, 71) présente une branche de verrou (29, 74) pour être verrouillée avec les butées de verrou et une branche d'actionnement (30, 75) pour manipuler le verrou de butée, ladite branche de verrou et ladite branche d'actionnement étant disposées en parallèle l'une par rapport à l'autre pour l'essentiel et étant reliées l'une avec l'autre à leurs extrémités adjacents par voie d'une base de butée (31, 73), ladite base de butée, dans la position de verrouillage, étant placée contre une bordure d'ouverture (39) de l'ouverture de passage (35), ladite bordure d'ouverture étant conçue par l'extrémité supérieure de la barrette de guidage (33).

4. Armature de prélèvement selon la revendication 3,
**caractérisée en ce que**
la base de butée (31, 73) présente une surface (41) disposée de manière affleurante dans une surface visible (42) de la paroi de fond (34, 58) de la partie de moyeu (18, 56), dans la position de verrouillage du verrou de butée (17, 71).

5. Armature de prélèvement selon la revendication 3 ou 4,
**caractérisée en ce que**
la branche de verrou (29), pour concevoir une unité de retenue, présente une butée de verrou (47) coopérant avec la partie de moyeu (18) et limitant le mouvement du verrou de butée (17) vers la position de déverrouillage.

6. Armature de prélèvement selon l'une quelconque des revendications 3 à 5,
**caractérisée en ce que**
la branche d'actionnement (30) du verrou de butée (17) présente une unité de fixation pour fixer un sceau d'originalité.

7. Armature de prélèvement selon la revendication 6,
**caractérisée en ce que**
l'unité de fixation est conçue comme une ouverture de passage (46).

8. Armature de prélèvement selon la revendication 7,
**caractérisée en ce que**
l'unité de fixation est conçue comme une ouverture de passage (46) dans une barrette de manipulation (45) de la branche d'actionnement (30) faisant saillie radialement.

9. Armature de prélèvement selon l'une quelconque des revendications 1 à 8,
**caractérisée en ce que**
la première butée de verrou est formée par la butée de boîtier (27) du dôme de boîtier (23) et la deuxième butée de verrou est formée par la butée de poignée (25), ladite butée de boîtier (27) étant reçue entre la butée de poignée (25) et le verrou de butée (17).

10. Armature de prélèvement selon la revendication 9,
**caractérisée en ce que**
la butée de boîtier (27) est conçue par une bride de butée (81) disposée à l'extérieur du dôme de boîtier (23).

11. Armature de prélèvement selon l'une quelconque des revendications 1 à 8,
**caractérisée en ce que**
la première butée de verrou est formée par une première butée de boîtier conçue au dôme de boîtier (53) et **en ce que** la deuxième butée de verrou est formée par une deuxième butée de boîtier conçue au dôme de boîtier et **en ce que** le verrou de butée (71) est reçu entre les butées de boîtier.

12. Armature de prélèvement selon la revendication 11,
**caractérisée en ce que**
la première butée de verrou est formée par une première extrémité axiale (67) d'une barrette de bordure (60) conçue à la bordure supérieure (59) du dôme de boîtier (53) sur toute la périphérie et **en ce que** la deuxième butée de verrou est formée par une deuxième extrémité axiale (72) de la barrette de bordure (60) disposée en vis-à-vis de la première extrémité axiale (67).
